# EUROPEAN PATENT SPECIFICATION

(11) **EP 2 481 040 B1**
(45) Date of publication and mention of the grant of the patent: **14.10.2015**
(21) Application number: 10754351.4
(22) Date of filing: 20.09.2010
(51) Int. Cl.: G09F 3/03, G02C 11/00, E05B 73/00

(54) **ANTI-THEFT SEAL, PARTICULARLY ADAPTED FOR APPLICATION TO SLENDER PARTS OF PRODUCTS SUCH AS EARPIECES OF EYEGLASSES AND THE LIKE**
DIEBSTAHLSICHERER VERSCHLUSS, INSBESONDERE ADAPTIERT ZUR ANWENDUNG AUF SCHMALEN TEILEN VON PRODUKTEN WIE ETWA BÜGEL EINER BRILLE UND DERGLEICHEN
JOINT ANTIVOL TOUT SPÉCIALEMENT ADAPTÉ À UNE APPLICATION SUR DES PARTIES ÉLANCÉES DE PRODUITS TELS QUE DES BRANCHES DE LUNETTES ET SIMILAIRES

(30) Priority: 22.09.2009 IT PD20090275
(43) Date of publication of application: 01.08.2012
(73) Proprietor: Technology Tags S.r.l., 36078 Valdagno (IT); Plasti-Max S.p.A., 24064 Grumello Del Monte (IT)
(72) Inventor: PIEROBON, Giulietta Andreina, 36078 Valdagno (IT)
(74) Representative: Modiano, Micaela Nadia
(86) International application number: PCT/EP2010/063814
(87) International publication number: WO 2011/036121

(56) References cited:
- EP-A1- 0 943 766
- EP-A2- 1 355 027
- WO-A1-00/15933
- US-A- 5 140 836

## Description

### Technical field

The present invention relates to an anti-theft seal, particularly adapted for application to slender parts of products such as earpieces of eyeglasses and the like.

### Background Art

Several models of seals adapted to retain an anti-theft device to a slender part of a product are currently known.

For example, in order to retain an anti-theft device to earpieces of eyeglasses or the like, a seal hinged along one edge is known which has two jaw-like parts which are mutually hinged on one side and have, on the other side, a connection device adapted for their mutual retention.

Thus, the seal can be fixed to the earpiece by closing it so that the two jaw-like parts include it, locking themselves to each other and to the earpiece by means of the connection device.

Such connection device generally comprises tabs which are provided with teeth complementarily and are connected to the opposite jaw-like ends, so that when they are closed onto each other such tabs couple to each other by means of the teeth that mutually engage.

In order to release the earpiece, a tool is provided which is adapted to divaricate the tabs so as to disengage their teeth and allow the separation of the jaw-like parts.

Contrast to sliding the seal off the product is provided by the friction between the central parts of the jaw-like parts, between which the slender part of the product, for example the earpiece, is clamped.

In particular, the friction force becomes more effective in contrasting the separation of the seal from the product as the jaw-like parts are mutually fastened more firmly.

This type of seal, despite being greatly appreciated, is however inadequate to meet the need to retain delicate products or products that have a delicate surface finish, which might be damaged by a firm constriction applied to them by the jaw-like parts in order to ensure an effective grip thereof.

Moreover, these seals hinged along one edge are unsuitable to be fixed to earpieces having a substantial thickness, since in this case the jaw-like parts that are closed thereon to lock the seal thereat are excessively divaricated, fully to the disadvantage of an effective retention of the seal on the product. An anti-theft seal is described in document US 5140836.

### Disclosure of the Invention

The aim of the present invention is to provide a seal that overcomes the drawbacks of currently known seals and further meets the described requirement, thus allowing to retain, on a slender part of a product, anti-theft devices in an effective and simultaneously delicate manner, so as to not damage it.

Within this aim, an object of the invention is to propose a seal that can adapt easily to slender products that have even greatly different thicknesses, while ensuring an effective connection thereto.

Another object of the invention is to provide a seal that can be applied easily to a product and can be easily separated correctly from it by means of an apparatus that is simple and easy to use.

Another object of the invention is to propose a seal which, in conditions for correct use, applies to the product with which it is associated a modest grip force, but instead clamps forcefully onto it if an attempt is made to separate it from the product.

Another object of the invention is to propose a seal that is structurally simple and easy to use and can be manufactured with low costs.

This aim and these and other objects that will become better apparent hereinafter are achieved by an anti-theft seal, adapted for application to slender parts of products such as earpieces of eyeglasses, comprising two complementary jaws which are provided, on opposite sides of a central part thereof adapted to grip a product, with means for mutual retention, which can be deactivated by magnetic action, characterized in that it comprises at least one plate, which is connected to at least one first one of said jaws, in said central part, so as to tilt with respect to at least one extraction direction of a slender part of the product which during use is comprised between said jaws, whereby jamming said plate against said slender part upon an attempt to extract it from said anti-theft seal, and contrast to extraction is achieved.

### Brief description of the drawings

Further characteristics and advantages of the invention will become better apparent from the following detailed description of a preferred but not exclusive embodiment of the anti-theft seal according to the invention, illustrated by way of non-limiting example in the accompanying drawings, wherein:

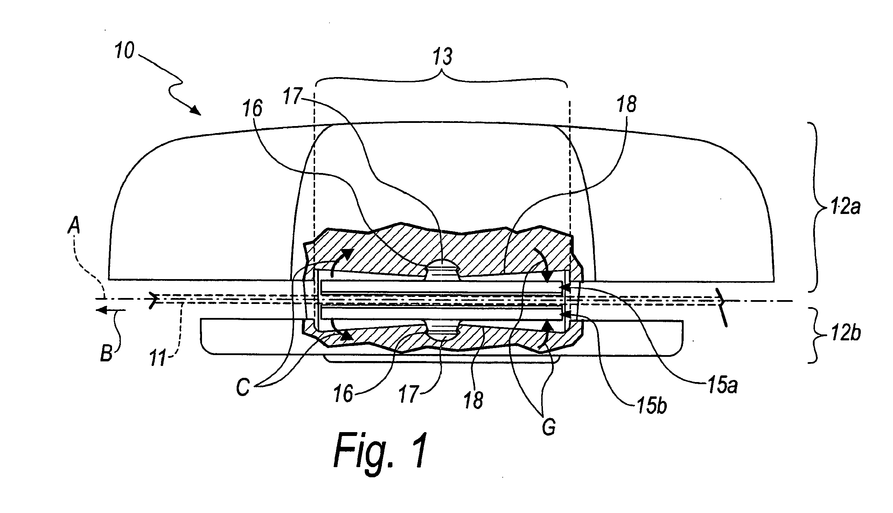

Figure 1 is a longitudinal sectional view of an anti-theft seal according to the invention;

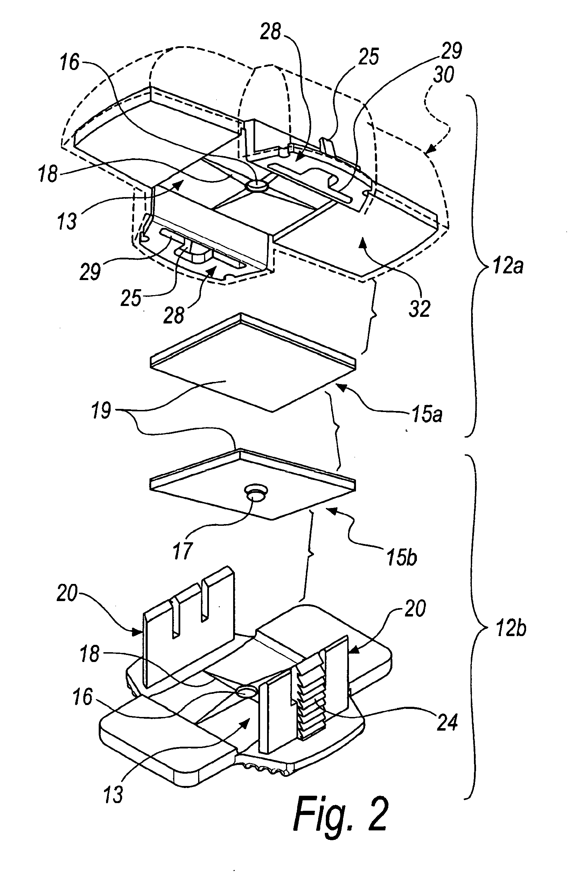

Figure 2 is an exploded perspective view of the anti-theft seal according to the invention;

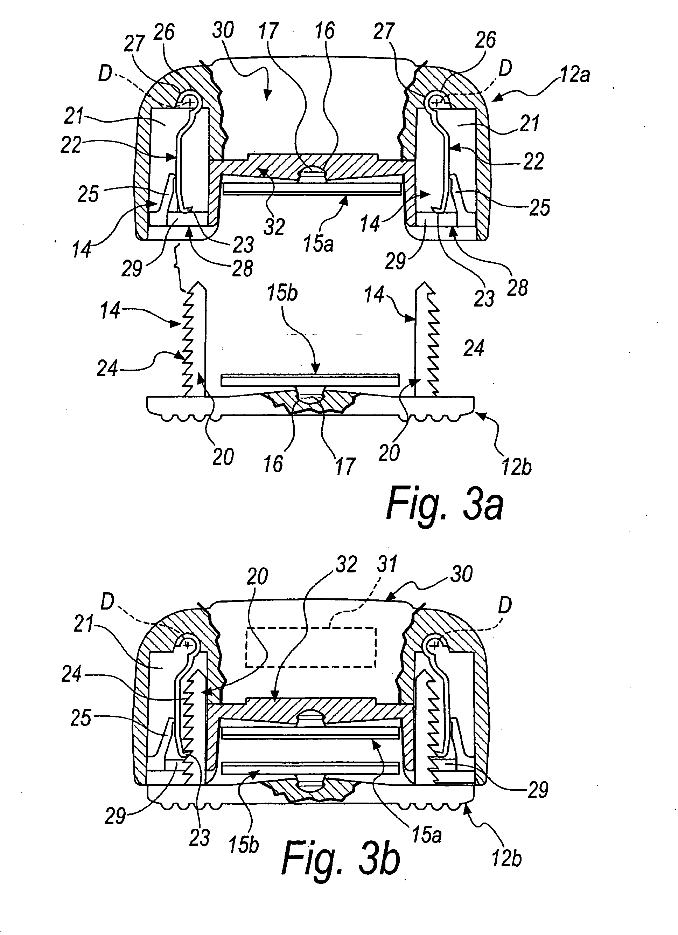

Figures 3a and 3b are transverse sectional views of the anti-theft seal according to the invention in the open and closed condition.

### Ways of carrying out the Invention

It is noted that anything found to be already known during the patenting process is understood not to be claimed and to be the subject of a disclaimer.

With reference to the figures, the reference numeral 10 generally designates an anti-theft seal, particularly adapted for application to slender parts 11 of products such as earpieces of eyeglasses and the like, comprising two complementary jaws 12a and 12b which are provided, on opposite sides of a central part 13 thereof adapted to grip a product, with means 14 for mutual retention, which can be deactivated by magnetic action.

According to the invention, the anti-theft seal 10 comprises two plates 15a and 15b, which are connected to the jaws 12a and 12b in the corresponding central parts 13, so as to tilt with respect to at least one extraction direction A of a slender part of the product which during use is comprised between the jaws 12a and 12b.

Thus, when the anti-theft seal 10 is in use, i.e., the jaws 12a and 12b are closed onto the slender part 11 of the product, if a traction force B is applied to such part in order to extract it from the seal 10, the plates 15a and 15b, by way of their friction with the slender part 11, tilt with rotations C, jamming against the slender part 11, contrasting its extraction.

In general, in alternative embodiments of the anti-theft seal according to the invention, which are not shown in the accompanying figures, such seal comprises at least one of such plates.

In particular, for example, it can comprise just one of such plates, connected to one of the jaws in such central part, so as to tilt with respect to at least one extraction direction of a slender part of the product that during use is comprised between the jaws.

In this case, upon an attempt to extract the product from the anti-theft seal, the plate tilts, jamming against the slender part so to contrast its extraction.

Moreover, the anti-theft seal 10 conveniently has
- an accommodation seat 16 for a connecting tab 17, which is adapted to connect the plates 15a and 15b to the central parts 13,
- the connecting tab 17, in a manner which is complementary to the accommodation seat 16.

Advantageously, in the embodiment described here, the accommodation seat 16 is formed at the top of a raised portion 18 that is provided centrally on the central part 13 of the jaws 12a and 12b.

At the same time, the connecting tab 17 protrudes from a face of the plates 15a and 15b by an extent that is greater than the depth of the accommodation seat 16.

In a substantially equivalent manner, in alternative embodiments of the invention, not shown in the accompanying figures, the accommodation seat can be provided vice versa on a face of the plate, the tab protruding from the central part of the jaw.

In any case, the connecting tab 17 inserted in the accommodation seat 16 forms a fulcrum for the tilting of the plates 15a and 15b with respect to the respective central parts 13, at least with respect to the extraction direction A.

Conveniently, there is also a gasket 19 for contrasting the sliding between the plates 15a and 15b and a product against which they abut during use.

The gasket 19 is advantageously made of rubber or the like and is associated with a face of the plates 15a and 15b that is adapted to abut against the product to which the anti-theft seal 10 is to be retained.

The retention means 14 preferably comprise toothed tabs 20, which protrude from one of the jaws 12a and 12b, for example from the second jaw 12b, the first jaw 12a having corresponding insertion seats 21 for the toothed tabs 20.

Lugs 22 are conveniently arranged in the insertion seats 21 and are generally provided with at least one tooth 23 for engagement with sets of teeth 24 of the toothed tabs 20.

The lugs 22 preferably are magnetically reactive and are supported in the insertion seats 21 so that they can be divaricated from the toothed tabs 20 in contrast with elastic means provided thereat, the lugs 22 gripping the toothed tabs 20 during use.

More particularly, such elastic means advantageously comprise elastic wings 25, which protrude into the insertion seats 21 in order to push the lugs 22 against the toothed tabs 20, with which they engage during use.

Furthermore, the lugs 22 are preferably made of magnetically reactive metallic material, so that they can be divaricated from the toothed tabs 20 by the action of a magnetic field, generated for example by a magnet which for this purpose is arranged adjacent to the anti-theft seal 10.

Moreover, the lugs 22 have a tooth 23 at one of their ends, which is adapted to engage the sets of teeth 24, and have at their other end a curl 26 which is substantially cylindrical and is accommodated in a contoured pivoting seat 27 formed in the insertion seats 21, so as to be able to tilt with respect to the central axis D, which is common to the curl 26 and to the pivoting seat 27 in which it is accommodated.

Thus, upon closure of the jaws 12a and 12b onto each other, the toothed tabs 20 enter the insertion seats 21, where they divaricate the lugs 22, by tilting about the central axis D, in contrast with the action of the elastic wings 25.

Thus, the tooth 23 of the lugs 22 slides in a ratchet-like fashion on the sets of teeth 24, which are conveniently sawtooth-shaped, and is pushed against them by the elastic wings 25.

The separation of the jaws 12a and 12b, once the toothed tabs 20 have been inserted in the insertion seats 21, is thus prevented by the engagement of the teeth 23 of the lugs 22 with the sets of teeth 24.

For the separation of the jaws 12a and 12b, it is therefore necessary to divaricate the lugs 22 from the toothed tabs 20, for example by means of magnets which are arranged next to the anti-theft seal 10 for this purpose.

In the embodiment of the invention described here, by way of non-limiting example, the sets of teeth 24 conveniently are formed on the toothed tabs 20 so as to be offset with respect to each other substantially by half a tooth.

In this manner, although the retention effectiveness of the jaws 12a and 12b with respect to each other is not compromised, their separation is facilitated when the lugs 22 are divaricated by the toothed tabs 20.

Since the sets of teeth 24 are offset, only one of the teeth 23 of the two lugs 22 in fact engages them completely, and so when they are divaricated first the lug 22 that engages more weakly the corresponding toothed tab 20 is disengaged, thus facilitating the disengagement of the other lug 22.

Moreover, the anti-theft seal 10 comprises conveniently masks 28 for contrasting the access of tools for divaricating the lugs 22 from the toothed tabs 20 when they are mutually engaged during use.

The masks 28 conveniently are provided at the mouths of the insertion seats 21 and have an opening 29 which is shaped strictly complementarily with respect to the cross-section of the toothed tabs 20, which during use are inserted in the insertion seats 21 through the openings 29.

More particularly, the jaw 12a, which has the insertion seats 21, comprises
- a shell 30, which forms internally a compartment for an anti-theft device 31 and the insertion seats 21 laterally to such compartment,
- a cover 32 for the shell 30, which forms centrally the central part 13, having laterally thereto lobes which form the masks 28 at the insertion seats 21, the mouths of which are covered by the masks 28 when the cover 32 is associated with the shell 30.

Therefore, thanks to the anti-theft seal 10, according to the invention, it is possible to retain an anti-theft device 31 on a product by means of a closing force of the jaws 12a and 12b on the slender part 11 thereof that can even be very small.

In fact, although the pressure force of the plates 15a and 15b against the slender part 11 is modest, when an attempt is made to extract such slender part from the anti-theft seal, the plates 15a and 15b jam against the slender part 11, contrasting their extraction.

In practice it has been found that the invention achieves the intended aim and objects, providing an anti-theft seal that allows to retain effectively but delicately a slender part of a product so as to not damage it.

Furthermore, an anti-theft seal according to the invention allows to adapt easily to slender products that have even broadly different thicknesses, while ensuring an effective connection to them, thanks to the fact of providing the two jaws so that they can be closed onto each other in a manner that can be modulated.

Moreover, an anti-theft seal according to the invention can be applied to a product easily and be separated correctly from it by means of a tool which is simple and easy to use, such as appropriately arranged magnets.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the contingent shapes and dimensions, may be any according to requirements and to the state of the art.

The disclosures in Italian Patent Application No. PD2009A000275 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An anti-theft seal (10), adapted for application to slender parts (11) of products such as earpieces of eyeglasses , comprising two complementary jaws (12a, 12b) which are provided, on opposite sides of a central part thereof (13) adapted to grip a product, with means for mutual retention (14) which can be deactivated by magnetic action, **characterized in that** it comprises at least one plate (15a, 15b), which is connected to at least one first one of said jaws (12a, 12b), in said central part (13), so as to tilt with respect to at least one extraction direction (A) of a slender part (11) of product which during use is comprised between said jaws (12a, 12b), whereby jamming of said at least one plate (15a, 15b) against said slender part (11) upon an attempt to extract it from said anti-theft seal (10) and contrast to extraction is achieved.

2. The anti-theft seal according to claim 1, **characterized in that** it comprises
- a first plate (15a), of said at least one plate (15a, 15b), which is connected so that it can tilt to a first one of said jaws (12a, 12b), in said central part (13), and
- a second plate (15b), of said at least one plate (15a, 15b), which is connected so that it can tilt to the second one of said jaws (12a, 12b),
said first plate (15a) and said second plate (15b) being arranged in said central parts of said jaws (12a, 12b) in a corresponding manner, during use a slender part (11) of a product being comprised between said plates (15a, 15b) which abut against it.

3. The anti-theft seal according to one or more of the preceding claims, **characterized in that** it has
- an accommodation seat (16) for a tab (17) for connecting said plate (15a, 15b) to said central part (13), said accommodation seat (16) being formed selectively on a face of said at least one plate (15a, 15b) or on said central part (13),
- said connecting tab (17), which protrudes selectively, and complementarily to said accommodation seat (16), on said central part (13) or on one face of said at least one plate (15a, 15b), by an extent that is greater than the depth of said accommodation seat (16), said connecting tab (17) inserted in said accommodation seat (16) forming a fulcrum for the tilting of said at least one plate (15a, 15b) with respect to said central part (13), at least with respect to said extraction direction (A).

4. The anti-theft seal according to one or more of the preceding claims, **characterized in that** it comprises a gasket (19) for contrasting the sliding between said at least one plate (15a, 15b) and a product against which it abuts during use, said gasket (19) being associated with a face of said at least one plate (15a, 15b) that is adapted to abut against the product to which said seal is to be retained.

5. The anti-theft seal according to one or more of the preceding claims, **characterized in that** said retention means (14) comprises toothed tabs (20), which protrude from one of said jaws (12a, 12b), the other one of said jaws (12a, 12b) having corresponding insertion seats (21) for said toothed tabs (20), lugs (22) being arranged in said insertion seats (21) and having at least one tooth (23) for engagement with sets of teeth (24) of said toothed tabs (20) to contrast the extraction of said tabs from said insertion seats (21), said lugs (22) being magnetically reactive and being supported in said insertion seats (21) so that they can be divaricated, in contrast with elastic means provided thereat, from said toothed tabs (20) which they grip during use.

6. The anti-theft seal according to claim 5, **characterized in that** said lugs (22) are made of magnetically reactive metallic material.

7. The anti-theft seal according to one or more of claims 5 and 6, **characterized in that** said lugs (22) have a tooth (23) at one of their ends, which is adapted to engage said sets of teeth (24), having at their other end a substantially cylindrical curl (26) which is accommodated in a contoured pivoting seat (27) formed in said insertion seats (21).

8. The anti-theft seal according to one or more of the preceding claims, **characterized in that** said sets of teeth (24) are formed on said toothed tabs (20) so as to be offset substantially by half a tooth (23).

9. The anti-theft seal according to one or more of the preceding claims, **characterized in that** it comprises at least one mask (28) for contrasting the access of tools for divaricating said lugs (22) from said toothed tabs (20), when they are mutually engaged during use, said at least one mask (28) being provided at the mouth of said insertion seats (21) and having an opening (29) which is shaped strictly complementarily with respect to the cross-section of said toothed tabs (20), which during use are inserted in said insertion seats (21) through said opening (29).

10. The anti-theft seal according to one or more of the preceding claims, **characterized in that** one of said jaws (12a, 12b), which has said insertion seats (21), comprises
- a shell (30), which forms internally a compartment for an anti-theft device (31) and said insertion seats (21) laterally to said compartment,
- a cover (32) for said shell (30), which forms centrally said central part (13) and has, laterally thereto, lobes which form masks (28), of said at least one mask (28), at said insertion seats (21), the mouths of which are covered by said masks (28) when said cover (32) is associated with said shell (30).

## Patentansprüche

1. Ein diebstahlsicherer Verschluss (10), ausgebildet zur Anwendung an schmalen Teilen (11) von Produkten wie etwa Bügeln einer Brille, umfassend zwei komplementäre Backen (12a, 12b), die auf gegenüberliegenden Seiten eines zentralen Teils (13) davon ausgebildet sind, um ein Produkt zu greifen, die mit Mitteln (14) zum gegenseitigen Halten ausgestattet sind, welche durch Magnetwirkung deaktiviert werden können, **dadurch gekennzeichnet, dass** er mindestens eine Platte (15a, 15b) umfasst, die in dem zentralen Teil (13) mit mindestens einer ersten der Backen (12a, 12b) verbunden ist, um im Verhältnis zu mindestens einer Auszugsrichtung (A) eines schmalen Teils (11) des Produkts, das sich im Gebrauch zwischen den Backen (12a, 12b) befindet, zu kippen, wodurch eine Blockierung der mindestens einen Platte (15a, 15b) gegen den schmalen Teil (11) bei einem Versuch, ihn aus dem diebstahlsicheren Verschluss (10) zu ziehen, und ein Entgegenwirken zur Extraktion erzielt wird.

2. Der diebstahlsichere Verschluss gemäß Anspruch 1, **dadurch gekennzeichnet, dass** er Folgendes umfasst:
- eine erste Platte (15a) der mindestens einen Platte (15a, 15b), die in dem zentralen Teil (13) kippbar zu einer ersten der Backen (12a, 12b) verbunden ist, und
- eine zweite Platte (15b) der mindestens einen Platte (15a, 15b), die kippbar zu der zweiten der Backen (12a, 12b) verbunden ist,
wobei die erste Platte (15a) und die zweite Platte (15b) auf entsprechende Art in den zentralen Teilen der Backen (12a, 12b) angeordnet sind, wobei sich im Gebrauch ein schmaler Teil (11) eines Produkts zwischen den Platten (15a, 15b) befindet, die an ihn anstoßen.

3. Der diebstahlsichere Verschluss gemäß einem oder mehreren der obigen Ansprüche, **dadurch gekennzeichnet, dass** er Folgendes hat:
- einen Aufnahmesitz (16) für einen Knopf (17) für die Verbindung der Platte (15a, 15b) mit dem zentralen Teil (13), wobei der Aufnahmesitz (16) wahlweise auf einer Fläche der mindestens einen Platte (15a, 15b) oder auf dem zentralen Teil (13) geformt ist,
- den Verbindungsknopf (17), der wahlweise, und komplementär zu dem Aufnahmesitz (16), aus dem zentralen Teil (13) oder aus einer Fläche der mindestens einen Platte (15a, 15b) herausragt, mit einem Grad, der größer ist als die Tiefe des Aufnahmesitzes (16),
wobei der Verbindungsknopf (17) in den Aufnahmesitz (16) eingeführt ist und einen Drehpunkt für das Kippen der mindestens einen Platte (15a, 15b) im Verhältnis zu dem zentralen Teil (13), zumindest mit Bezug auf die Auszugsrichtung (A), bildet.

4. Der diebstahlsichere Verschluss gemäß einem oder mehreren der obigen Ansprüche, **dadurch gekennzeichnet, dass** er eine Dichtung (19) umfasst, um dem Gleiten zwischen der mindestens einen Platte (15a, 15b) und einem Produkt, an das sie während des Gebrauchs anstößt, entgegenzuwirken, wobei die Dichtung (19) mit einer Fläche der mindestens einen Platte (15a, 15b) verbunden ist, die ausgebildet ist, um an das Produkt anzustoßen, gegen welches der Verschluss gehalten werden soll.

5. Der diebstahlsichere Verschluss gemäß einem oder mehreren der obigen Ansprüche, **dadurch gekennzeichnet, dass** die Haltemittel (14) gezahnte Laschen (20) umfassen, die aus einer der Backen (12a, 12b) herausragen, wobei die andere der Backen (12a, 12b) entsprechende Einführsitze (21) für die gezahnten Laschen (20) hat, wobei Ösen (22) in den Einführsitzen (21) angeordnet sind und mindestens einen Zahn (23) für den Eingriff in Sätze von Zähnen (24) der gezahnten Laschen (20) haben, um dem Herausziehen der Laschen aus den Einführsitzen (21) entgegenzuwirken, wobei die Ösen (22) magnetisch reaktiv sind und in den Einführsitzen (21) so gelagert sind, dass sie, im Kontrast zu dort bereitgestellten elastischen Mitteln, von den gezahnten Laschen (20) aufgespreizt werden können, die sie im Gebrauch greifen.

6. Der diebstahlsichere Verschluss gemäß Anspruch 5, **dadurch gekennzeichnet, dass** die Ösen (22) aus magnetisch reaktivem Metallmaterial bestehen.

7. Der diebstahlsichere Verschluss gemäß einem oder mehreren der Ansprüche 5 und 6, **dadurch gekennzeichnet, dass** die Ösen (22) einen Zahn (23) an einem ihrer Enden haben, der ausgebildet ist, um in die Sätze von Zähnen (24) einzugreifen, und an ihrem anderen Ende eine im Wesentlichen zylindrische Krümmung (26) haben, die in einem konturierten Schwenksitz (27) untergebracht ist, welcher in den Einführsitzen (21) geformt ist.

8. Der diebstahlsichere Verschluss gemäß einem oder mehreren der obigen Ansprüche, **dadurch gekennzeichnet, dass** die Sätze von Zähnen (24) so an den gezahnten Laschen (20) angeformt sind, dass sie im Wesentlichen um einen halben Zahn (23) versetzt sind.

9. Der diebstahlsichere Verschluss gemäß einem oder mehreren der obigen Ansprüche, **dadurch gekennzeichnet, dass** er mindestens eine Maske (28) umfasst, um dem Zugriff von Werkzeugen, um die Ösen (22) aus den gezahnten Laschen (20) zu spreizen, entgegenzuwirken, wenn sie im Gebrauch ineinander eingreifen, wobei die mindestens eine Maske (28) an der Öffnung der Einführsitze (21) angebracht ist und eine Öffnung (29) hat, welche streng komplementär zum Querschnitt der gezahnten Laschen (20) ist, welche im Gebrauch durch die Öffnung (29) in die Einführsitze (21) eingeführt werden.

10. Der diebstahlsichere Verschluss gemäß einem oder mehreren der obigen Ansprüche, **dadurch gekennzeichnet, dass** eine der Backen (12a, 12b), die die Einführsitze (21) hat, Folgendes umfasst:
- eine Schale (30), die innen einen Hohlraum für einen Diebstahlschutz (31) bildet und die Einführsitze (21) seitlich zu dem Hohlraum aufweist,
- eine Abdeckung (32) für die Schale (30), die in der Mitte den zentralen Teil (13) bildet und, die seitlich davon, Flügel hat, die Masken (28), der mindestens einen Maske (28), an den Einführsitzen (21) bilden, wobei deren Öffnungen von den Masken (28) bedeckt sind, wenn die Abdeckung (32) mit der Schale (30) verbunden ist.

## Revendications

1. Joint antivol (10) adapté pour être appliqué sur des parties élancées (11) de produits tels que des branches de lunettes, comprenant deux mâchoires complémentaires (12a, 12b) qui sont prévues, sur des côtés opposés de leur partie centrale (13) adaptées pour saisir un objet, avec des moyens de retenue mutuelle (14) qui peuvent être désactivés par action magnétique, **caractérisé en ce qu'**il comprend au moins une plaque (15a, 15b) qui est raccordée à au moins une première desdites mâchoires (12a, 12b) dans ladite partie centrale (13) afin de s'incliner par rapport à une direction d'extraction (A) d'une partie élancée (11) du produit qui, pendant l'utilisation, est comprise entre lesdites mâchoires (12a, 12b), moyennant quoi l'on obtient le blocage de ladite au moins une plaque (15a, 15b) contre ladite partie élancées (11) suite à une tentative pour l'extraire dudit joint antivol (10) et pour s'opposer à l'extraction.

2. Joint antivol selon la revendication 1, **caractérisé en ce qu'**il comprend :
- une première plaque (15a) de ladite au moins une plaque (15a, 15b) qui est raccordée de sorte qu'elle peut s'incliner vers une première desdites mâchoires (12a, 12b) dans ladite partie centrale (13), et
- une seconde plaque (15b) de ladite au moins une plaque (15a, 15b) qui est raccordée de sorte qu'elle peut s'incliner sur la seconde desdites mâchoires (12a, 12b),
ladite première plaque (15a) et ladite seconde plaque (15b) étant agencées dans lesdites parties centrales desdites mâchoires (12a, 12b) d'une manière correspondante, pendant l'utilisation, une partie élancées (11) d'un produit étant comprise entre lesdites plaques (15a, 15b) qui viennent en butée contre cette dernière.

3. Joint antivol selon une ou plusieurs des revendications précédentes, **caractérisé en ce qu'**il a :
- un siège de logement (16) pour une languette (17) pour raccorder ladite plaque (15a, 15b) à ladite partie centrale (13), ledit siège de logement (16) étant sélectivement formé sur une face de ladite au moins une plaque (15a, 15b) ou sur ladite partie centrale (13),
- ladite languette de raccordement (17) qui fait saillie sélectivement et de manière complémentaire audit siège de logement (16), sur ladite partie centrale (13) ou sur une face de ladite au moins une plaque (15a, 15b), sur une étendue qui est supérieure à la profondeur dudit siège de logement (16),
ladite languette de raccordement (17) insérée dans ledit siège de logement (16) formant un point de pivot pour l'inclinaison de ladite au moins une plaque (15a, 15b) par rapport à ladite partie centrale (13), au moins par rapport à ladite direction d'extraction (A).

4. Joint antivol selon une ou plusieurs des revendications précédentes, **caractérisé en ce qu'**il comprend une joint (19) pour s'opposer au glissement entre ladite au moins une plaque (15a, 15b) et un produit contre lequel il vient en butée pendant l'utilisation, ledit joint (19) étant associé à une face de ladite au moins une plaque (15a, 16b) qui est adaptée pour venir en butée contre le produit sur lequel ledit joint doit être retenu.

5. Joint antivol selon une ou plusieurs des revendications précédentes, **caractérisé en ce que** lesdits moyens de retenue (14) comprennent des languettes dentées (20) qui font saillie à partir de l'une desdites mâchoires (12a, 12b), l'autre desdites mâchoires (12a, 12b) ayant des sièges d'insertion (21) correspondants pour lesdites languettes dentées (20), des ergots (22) étant agencés dans lesdits sièges d'insertion (21) et ayant au moins une dent (23) pour la mise en prise avec des ensembles de dents (24) desdites languettes dentées (20) pour s'opposer à l'extraction desdites languettes desdits sièges d'insertion (21), lesdits ergots (22) étant magnétiquement réactifs et étant supportés dans lesdits sièges d'insertion (21) de sorte qu'ils peuvent être déviés, en contraste avec les moyens élastiques prévus au niveau de ces derniers, à partir desdites languettes dentées (20) qu'ils saisissent pendant l'utilisation.

6. Joint antivol selon la revendication 5, **caractérisé en ce que** lesdits ergots (22) sont réalisés avec un matériau métallique magnétiquement réactif.

7. Joint antivol selon une ou plusieurs des revendications 5 et 6, **caractérisé en ce que** lesdits ergots (22) ont une dent (23) au niveau de l'une de leurs extrémités, qui est adaptée pour mettre en prise lesdits ensembles de dents (24), ayant au niveau de leur autre extrémité, une boucle sensiblement cylindrique (26) qui est logée dans un siège pivotant profilé (27) formé dans lesdits sièges d'insertion (21).

8. Joint antivol selon une ou plusieurs des revendications précédentes, **caractérisé en ce que** lesdits ensembles de dents (24) sont formés sur lesdites languettes dentées (20) afin d'être décalés sensiblement selon la moitié d'une dent (23).

9. Joint antivol selon une ou plusieurs des revendications précédentes, **caractérisé en ce qu'**elle comprend au moins un masque (28) pour s'opposer à l'accès d'outils afin de dévier lesdits ergots (22) desdites languettes dentées (20), lorsqu'ils sont mutuellement mis en prise, pendant l'utilisation, ledit au moins un masque (28) étant prévu au niveau de la bouche desdits sièges d'insertion (21) et ayant une ouverture (29) qui est formée de manière strictement complémentaire par rapport à la section transversale desdites languettes dentées (20) qui, pendant l'utilisation, sont insérées dans lesdits sièges d'insertion (21) à travers ladite ouverture (29).

10. Joint antivol selon une ou plusieurs des revendications précédentes, **caractérisé en ce que** l'une desdites mâchoires (12a, 12b) qui a lesdits sièges d'insertion (21), comprend :
- une coque (30) qui forme intérieurement un compartiment pour un dispositif antivol (31) et lesdits sièges d'insertion (21) latéralement par rapport audit compartiment,
- un couvercle (32) pour ladite coque (30) qui forme centralement ladite partie centrale (13) et a, latéralement par rapport à cette dernière, des lobes qui forment des masques (28) du au moins un masque (28), au niveau desdits sièges d'insertion (21), dont les bouches sont recouvertes par lesdits masques (28) lorsque ledit couvercle (32) est associé à ladite coque (30).
